(19)

Europäisches Patentamt

European Patent Office

Office européen des brevets

(11) **EP 4 207 035 A1**

(12) **EUROPEAN PATENT APPLICATION**

published in accordance with Art. 153(4) EPC

(43) Date of publication:
**05.07.2023 Bulletin 2023/27**

(21) Application number: **21882012.4**

(22) Date of filing: **19.10.2021**

(51) International Patent Classification (IPC):
**G06Q 30/06** (2023.01)

(86) International application number:
**PCT/CN2021/124783**

(87) International publication number:
**WO 2022/083596 (28.04.2022 Gazette 2022/17)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **20.10.2020 CN 202011126741**

(71) Applicants:
• **Beijing Wodong Tianjun Information Technology Co.,**
**Ltd.**
**100176 Beijing (CN)**

• **Beijing Jingdong Century Trading Co., Ltd.**
**Beijing 100176 (CN)**

(72) Inventors:
• **WANG, Shengli**
**Beijing 100176 (CN)**
• **ZHU, Jian**
**Beijing 100176 (CN)**
• **ZHANG, Xiaomin**
**Beijing 100176 (CN)**
• **LI, Wenjie**
**Beijing 100176 (CN)**

(74) Representative: **Regimbeau**
**20, rue de Chazelles**
**75847 Paris Cedex 17 (FR)**

(54) **SORTING METHOD, APPARATUS AND DEVICE, AND COMPUTER STORAGE MEDIUM**

(57) Provided are a sorting method, apparatus and device, and a computer storage medium. The method comprises: determining a first sorting result on the basis of a query requirement of a user; on the basis of the first sorting result, determining a feature value set of each commodity to be sorted that is in a preset commodity list, wherein the feature value set at least comprises a target position feature value, and the target position feature value is obtained by means of performing calculation on the basis of a sorting position of each said commodity in the first sorting result and a preset display position; and on the basis of the feature value set of each said commodity in the preset commodity list, re-sorting the preset commodity list by using a preset re-sorting model, so as to obtain a second sorting result. Therefore, by means of comprehensively taking a sorting position in a first sorting result and a preset display position into consideration, and taking an obtained target position feature value as one of the features of a commodity to be sorted, the influence of a position bias on a commodity can be taken into full consideration, such that a final sorting result better conforms to a user requirement.

**FIG. 1**

**Description**

CROSS-REFERENCE TO RELATED APPLICATION

The application claims priority to Chinese patent application No. 202011126741.6, filed to China National Intellectual Property Administration on October 20, 2020 and entitled "SORTING METHOD, APPARATUS AND DEVICE, AND COMPUTER STORAGE MEDIUM", the entire disclosure of which is hereby incorporated by reference in its entirety.

TECHNICAL FIELD

The application relates to the technical field of item search, in particular to a ranking method, a ranking apparatus, a ranking device and a computer storage medium.

BACKGROUND

Ranking is a core task in a search system. Specifically, in a scenario of item search, a user inputs a keyword related to an item for query, obtains an item list returned by the search system, and the user decides whether to place an order by comparing multiple items in the item list. For the search system, the ranking process for the item list usually includes a matching process, a pre-ranking process (optional), a ranking process and a re-ranking process. In the process of the ranking, items and users are usually modeled, a potential purchase intention for an item in the matched item list is scored according to interests of the user, the item with a higher score is placed in front, and the item with a lower score is moved backward, so that the user can quickly and accurately find an ideal item, thereby improving a core business indicator.

In the related art, the user browses the item list after query, and makes a decision according to the items displayed in a window and the items displayed by sliding a page. Thus, a position of an item in the item list will have an important impact on the decision of the user. That is, the position of the item in the item list will affect the decision of the user, and the decision of the user will in turn affect a next position of the item. As a result, the ranking result is always negatively impacted by position bias, which makes the ranking result not sufficiently close to the requirements of the user.

SUMMARY

Embodiments of the application provide a ranking method, a ranking apparatus, a ranking device and a computer storage medium, which may reduce the negative impact of the position bias on the ranking result and makes the item ranking result more in line with the requirements of the user.

The technical solutions in the embodiments of the application are implemented as follows.

In a first aspect, an embodiment of the application provides a ranking method, which includes the following operations.

A first ranking result is determined based on a query requirement from a user. The first ranking result is obtained by ranking at least one item to be ranked in a preset item list based on the query requirement.

A feature value set of each item to be ranked in the preset item list is determined based on the first ranking result. The feature value set at least includes a target position feature value, and the target position feature value is calculated based on a ranking position of the item to be ranked in the first ranking result and a preset display position of the item to be ranked.

The preset item list is re-ranked based on the feature value set of each item to be ranked in the preset item list by using a preset re-ranking model, to obtain a second ranking result.

In a second aspect, an embodiment of the application provides a ranking apparatus, which includes an obtaining unit, a feature unit and a ranking unit.

The obtaining unit is configured to determine a first ranking result based on a query requirement from a user. The first ranking result is obtained by ranking at least one item to be ranked in a preset item list based on the query requirement.

The feature unit is configured to determine a feature value set of each item to be ranked in the preset item list based on the first ranking result. The feature value set at least includes a target position feature value, and the target position feature value is calculated based on a ranking position of the item to be ranked in the first ranking result and a preset display position of the item to be ranked.

The ranking unit is configured to re-rank the preset item list based on the feature value set of each item to be ranked in the preset item list by using a preset re-ranking model, to obtain a second ranking result.

In a third aspect, an embodiment of the application provides a ranking device, which includes a memory and a processor.

The memory stores executable instructions capable of being run on the processor.

The processor is configured to perform the executable instructions to implement operations of the method provided in the first aspect.

In a fourth aspect, an embodiment of the application provides a computer storage medium having stored thereon ranking instructions that, when being executed by at least one processor, cause the at least one processor to implement operations of the method provided in the first aspect.

The embodiments of the application provide a ranking method, a ranking apparatus, a ranking device and a computer storage medium. The method includes the following operations. A first ranking result is determined based on a query requirement from a user. The first ranking result is obtained by ranking at least one item to be ranked in a preset item list based on the query requirement. A feature value set of each item to be ranked in the preset item list is determined based on the first ranking result. The feature value set at least includes a target position feature value, and the target position feature value is calculated based on a ranking position of the item to be ranked in the first ranking result and a preset display position of the item to be ranked. The preset item list is re-ranked based on the feature value set of each item to be ranked in the preset item list by using a preset re-ranking model, to obtain a second ranking result. In this way, the items are re-ranked more finely by using the preset re-ranking model after ranking, so that the items can be ranked by using the preset re-ranking model in a global field of vision, and the final ranking result matches a browsing behavior of the user better. In addition, the target position feature value is calculated based on the ranking position in the first ranking result and the preset display position, and the target position feature value is used as one of the features of the item. In this way, the ranking result in the ranking process may be fully considered during the re-ranking process, the position bias caused by the display position is reduced, and the negative impact of the position bias on the ranking result is reduced, so that the ranking result is fairer and the final ranking result is more in line with the requirements of the user, thereby improving the satisfaction of the user.

BRIEF DESCRIPTION OF THE DRAWINGS

FIG. 1 is a schematic flowchart illustrating a ranking method according to an embodiment of the application.

FIG. 2 is a schematic flowchart illustrating a ranking method according to another embodiment of the application.

FIG. 3 is a schematic flowchart illustrating a ranking method according to yet another embodiment of the application.

FIG. 4 is a schematic diagram of operations for calculating a target position feature value according to an embodiment of the application.

FIG. 5 is a schematic structural diagram illustrating a ranking apparatus according to an embodiment of the application.

FIG. 6 is a schematic structural diagram illustrating a ranking apparatus according to another embodiment of the application.

FIG. 7 is a schematic diagram illustrating a specific hardware structure of a ranking device according to an embodiment of the application.

FIG. 8 is a schematic diagram illustrating a composition structure of an item search system according to an embodiment of the application.

DETAILED DESCRIPTION

The technical solutions in the embodiments of the application will be clearly and completely described below with reference to the drawings in the embodiments of the application.

Based on this, an embodiment of the application provides a ranking method. A basic idea of the method is described as follows. A first ranking result is determined based on a query requirement from a user. The first ranking result is obtained by ranking at least one item to be ranked in a preset item list based on the query requirement. A feature value set of each item to be ranked in the preset item list is determined based on the first ranking result. The feature value set at least includes a target position feature value, and the target position feature value is calculated based on a ranking position of the item to be ranked in the first ranking result and a preset display position of the item to be ranked. The preset item list is re-ranked based on the feature value set of each item to be ranked in the preset item list by using a preset re-ranking model, to obtain a second ranking result. In this way, the items are re-ranked more finely by using the preset re-ranking model after ranking, so that the items can be ranked by using the preset re-ranking model in a global field of vision, and the final ranking result matches a browsing behavior of the user better. In addition, the target position feature value is calculated based on the ranking position in the first ranking result and the preset display position, and the target position feature value is used as one of the features of the item. In this way, the ranking result in the ranking process may be fully considered during the re-ranking process, the position bias caused by the display position is reduced, and the negative impact of the position bias on the ranking result is reduced, so that the ranking result is fairer and the final ranking result is more in line with the requirements of the user, thereby improving the satisfaction of the user.

Embodiments of the application will be described in detail below with reference to the drawings.

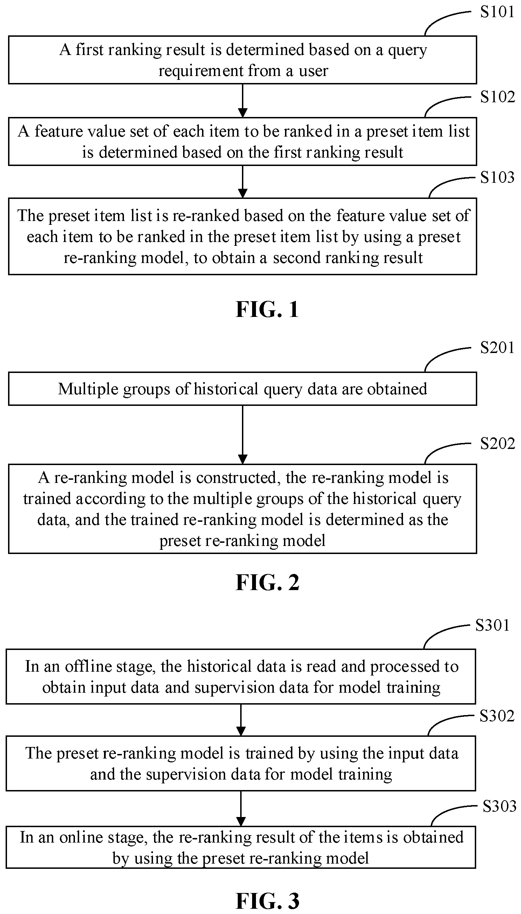

FIG. 1 is a schematic flowchart illustrating a ranking method according to an embodiment of the application. As illustrated in FIG. 1, the method includes the following operations.

At S101, a first ranking result is determined based on a query requirement from a user.

The first ranking result is obtained by ranking at least one item to be ranked in a preset item list based on the query requirement.

It should be noted that item ranking is a complex process in e-commerce sector. Generally speaking, the entire ranking chain can be divided into matching, pre-ranking, ranking and re-ranking. In the matching process, a small number of items that the user might be interested in are quickly matched from an item library with a large number of items according to part of the features of the user, and then the process proceeds to the ranking process. In the pre-ranking process, the results of the matching process are roughly ranking by using a relatively simple model, which further reduces the number of items to be transmitted to the next processes on the premise of ensuring certain accuracy. The pre-ranking process is not necessary and may be cancelled in simple scenarios. In the ranking process, a large number of item features and complex models are used to rank the items individually as accurately as possible. In the re-ranking process, a head sequence in the ranking result is further ranked.

The ranking method provided by the embodiment of the application is mainly applied to the re-ranking process. The system has completed the preliminary ranking of the items, that is, the system has obtained the first ranking result according to the query requirement from the user. In addition, the item in the embodiment of the application not only includes a conventional item displayed on an e-commerce website, but also includes items in various search fields, such as a video search, news search, advertisement push or the like.

It should also be noted that the query requirement indicates an expectation for a target item input by the user in an item search page. In the context of an item search, the user inputs the requirement for the target item through the item search page, such as an item name, an item type, an item material, a price range or the like. A query will be generated for each search from the user. In short, a query is performed every time a search button is clicked. For each query, the system will collect a query word input by the user in the item search page, and performs natural language parsing to get the query requirement from the user. In addition, the query requirement may only refer to the requirement input by the user, and may also be generated by the system after processing the group features of the user and the requirement input by the user. For example, if the user inputs a certain keyword, the query requirement may be generated only according to the keyword, and the query requirement may also be generated according to an identity feature of the user and the keyword.

The first ranking result is obtained by ranking at least one item to be ranked in the preset item list based on the query requirement. The preset item list includes items to be ranked. In a practical application, the preset item list may include all items in the e-commerce website system, or some of the items screened out after matching, pre-ranking, or ranking. That is, the first ranking result may be obtained according to a preset ranking model. Thus, in some embodiments, the operation that the first ranking result is determined based on the query requirement from the user may include the following actions.

The query requirement is received from the user.

Multiple items are ranked based on the query requirement from the user by using a preset ranking model, to obtain an initial item sequence.

The initial item sequence is intercepted based on a preset quantity to obtain the preset item list.

It should be noted that the preset item list is ranked by the preset ranking model after receiving the query requirement from the user, to obtain the initial item sequence after ranking. The preset ranking model can include a variety of models, such as Deep Interest Network (DIN) model, Deep Neural Network (DNN) model and wide&Deep model.

Specifically, in one query, the item search system first receives the query requirement from the user, such as the query keyword, the price range and the like. Multiple items to be ranked in the preset item list are calculated and ranked through a preset ranking model based on the query requirement from the user, to obtain the initial item sequence.

It should also be noted that, the initial item sequence may still include a large number of items, which may lead to an excessive processing capacity. Therefore, part of the items at the head of the initial item sequence may be re-ranked more finely. The initial item sequence is intercepted based on the preset quantity, to obtain the preset item list. The preset quantity may be determined according to the application scenario, and there is no limit made in the embodiment of the application. The initial item sequence may also be determined as the preset item list without considering the processing capacity.

At S 102, a feature value set of each item to be ranked in the preset item list is determined based on the first ranking result.

It should be noted that, the feature value set of each item to be ranked in the obtained first ranking result is obtained. Each item to be ranked may have many different features, such as a material, a price, a purchase number and the like, and these features may be used as the feature values for scoring the item in the re-ranking process.

The feature value set at least includes a target position feature value of the item to be ranked, and the target position feature value is calculated based on a ranking position of the item to be ranked in the first ranking result and a preset display position of the item to be ranked. The position of the item to be ranked in the sequence of items to be ranked is used, so that the ranking result of the previous module can be used fully, and the preset display position is an assumed display position, which can reduce the position bias caused by the final display position.

That is to say, due to the existence of the re-ranking process, the ranking position of a certain item in the first ranking result is different from the final display position of the item on the page. The ranking position in the first ranking result is easier to be compared, while the impact of the display position on the user is relatively complex, such as a head effect. Therefore, in order to make full use of the previous ranking result and overcome the position bias of the display page, the embodiment of the application encodes the ranking position and the display position together, and introduces the target position feature value.

That is to say, during the calculation process, in order to avoid the impact of the display position bias as much as possible, the preset display position is taken as the assumed display position of the item, so that the display positions of all items are the same and there will be no bias because of the display position. Thus, the way of synthesizing the target position feature value by using the preset display position and the ranking position in the first ranking result can not only correct the display position bias, but also consider the position relationship in the first ranking result, so that an effect of an individualized ranking is strengthened and the ranking result matches the browsing behavior of the user better.

Specifically, the target position feature value can be obtained by a sum pooling calculation. In some embodiments, before determining the feature value set of each item to be ranked in the preset item list based on the first ranking result, the method may further include the following operation.

The target position feature value of each item to be ranked is determined.

The operation of determining the target position feature value of each item to be ranked may specifically include the following actions.

A first position encoding value of each item to be ranked is determined through a preset first lookup table based on the ranking position of the item to be ranked in the first ranking result.

A preset second encoding value of each item to be ranked is determined through a preset second lookup table based on the preset display position of the item to be ranked.

A sum pooling calculation is performed on the first position encoding value and the preset second encoding value of each item to be ranked, to obtain the target position feature value of the item to be ranked.

It should be noted that, it is necessary to convert the specific position into the encoding value when performing the calculation. The common method for calculating the target position feature value includes a sine function encoding method, a random learnable vector encoding method and a relative target position feature value. The preset first lookup table and the preset second lookup table are position-encoding comparison tables using a certain position encoding method. That is, a first position encoding value corresponding to the ranking position can be determined from the preset first lookup table according to the ranking position in the first ranking result. A second position encoding value corresponding to the preset display position can be found in the preset second lookup table according to the preset display position. Herein, the specific position encoding method can be flexibly selected according to the application scenario and there is no limit made thereto in the embodiment of the application.

With the support of massive data of item search, the random learnable vector encoding method has the best effect, because the encoding model can summarize a position pattern from the data. For the random learnable vector encoding method, a vector with the same dimension as an input layer is randomly initialized, a parameter is set into a learnable state, and a gradient of the model is transmitted back to a position encoding layer. That is to say, the position-encoding relationship in the random learnable vector encoding method is obtained by learning, which may be closer to an actual position. In order to weaken the position bias, the preset display position of each item is encoded into another vector in the same way, and merged with the ranking position in the first ranking result to form a final target position feature value.

In the related art, the position information of items is not considered, and the ranking result is not accurate enough. In the embodiment of the application, the ranking position in the preset first lookup table and the preset display position are incorporated to construct the target position feature value, thereby improving the accuracy of the ranking result. In this way, comprehensive position information is included in the feature value set of each item to be ranked, so that the subsequent re-ranking result matches the actual requirement better.

At S103, the preset item list is re-ranked based on the feature value set of each item to be ranked in the preset item list by using a preset re-ranking model, to obtain a second ranking result.

It should be noted that, the preset re-ranking model is a model that is trained by using historical data and can indicate a degree of conformity between the user requirement and the item. That is to say, the preset re-ranking model can calculate the degree of conformity between each item to be ranked and the requirement from the user according to the query requirement and the feature value set of the item to be ranked, and then determines the final position of the item, thereby obtaining the second ranking result, that is, the re-ranked item sequence.

It should also be noted that, the preset re-ranking model can also be updated according to a timeline. Generally speaking, in order to prevent excessive processing capacity, the preset re-ranking model is generally trained in an offline stage. In an online stage, the trained preset re-ranking model is directly used for calculation, so as to quickly determine the final ranking result according to the query requirement from the user, and display the final ranking result to the user.

Further, in some embodiments, the operation that the preset item list is re-ranked based on the feature value set of each item to be ranked in the preset item list by using the preset re-ranking model to obtain the second ranking result may include the following actions.

A score of each item to be ranked is calculated by using the preset re-ranking model based on the feature value set of the item to be ranked in the preset item list.

The preset item list is ranked based on the score of each item to be ranked, to obtain the second ranking result.

It should be noted that, the preset re-ranking model can calculate the score of the item to be ranked from the feature value set of the item to be ranked based on the query requirement. Herein, the score essentially represents a probability value of visiting the item to be ranked by the user. Therefore, the higher the score of the item to be ranked, the greater the possibility of visiting the item by the user, that is, the higher the degree of conformity between the item and the query requirement. Then, the items to be ranked are re-ranked based on the scores to obtain the second ranking result.

Further, in some embodiments, the operation that the score of each item to be ranked is calculated by using the preset re-ranking model based on the feature value set of the item to be ranked in the preset item list may include the following actions.

A query feature vector is determined based on the query requirement.

An item feature vector is determined based on the feature value set of each item to be ranked.

The query feature vector and the item feature vector are concatenated to obtain a re-ranking input vector.

The re-ranking input vector is input into the preset re-ranking model to obtain the score of the item to be ranked.

It should be noted that, the input of the preset re-ranking model includes two aspects, i.e., the query feature corresponding to each query (i.e., the query feature vector for the query requirement) and the features of the item to be selected (i.e., the item feature vector). The query feature mainly reflects the expectation of the user for the target item, and may also include a user group feature of the user itself. The features of the item to be selected mainly reflect the features of the item in multiple ranked items. Specifically, the query feature vector is determined based on the previous obtained query requirement. The item feature vector is determined based on the feature value set of each item to be ranked. The two vectors are concatenated to obtain the re-ranking input vector, and the re-ranking input vector is input into the preset re-ranking model to calculate the score of each item to be ranked.

After the second ranking result is obtained, the queried items can be displayed to the user. Thus, in some embodiments, after re-ranking the preset item list by using the preset re-ranking model to obtain the second ranking result, the method may further comprises the following operation.

Items are recommended to the user based on the second ranking result.

It should be noted that, the second ranking result is obtained by further re-ranking based on the first ranking result, and thus matches the requirement from the user better. Thus, items are recommended to the user based on the second ranking result, so as to improve a purchase behavior of the user. Herein, due to the limited processing capacity, the second ranking result may be a re-ranking result of a small number of items. Therefore, the second ranking result can be concatenated with other ranking result of a previous ranking module for recommendation when recommending items.

In this way, the query requirement and the first ranking result are used as input to obtain the re-ranked item sequence by using the preset re-ranking model, so that the ranking result is more in line with the requirement from the user.

The embodiments of the application provide a ranking method. The method includes the following operations. A first ranking result is determined based on a query requirement from a user. The first ranking result is obtained by ranking at least one item to be ranked in a preset item list based on the query requirement. A feature value set of each item to be ranked in the preset item list is determined based on the first ranking result. The feature value set at least includes a target position feature value, and the target position feature value is calculated based on a ranking position of the item to be ranked in the first ranking result and a preset display position of the item to be ranked. The preset item list is re-ranked based on the feature value set of each item to be ranked in the preset item list by using a preset re-ranking model, to obtain a second ranking result. In this way, the items are re-ranked more finely by using the preset re-ranking model after ranking, so that the items can be ranked by using the preset re-ranking model in a global field of vision, and the final ranking result matches a browsing behavior of the user better. In addition, the target position feature value is calculated based on the ranking position in the first ranking result and the preset display position, and the target position feature value is used as one of the features of the item. In this way, the ranking result in the ranking process may be fully considered during the re-ranking process, the position bias caused by the display position is reduced, and the negative impact of the position bias on the ranking result is reduced, so that the ranking result is fairer and the final ranking result is more in line with the requirements of the user, thereby improving the satisfaction of the user.

FIG. 2 is a schematic flowchart illustrating another ranking method according to another embodiment of the application. As illustrated in FIG. 2, the method may further include the following operations.

At S201, multiple groups of historical query data are obtained.

It should be noted that a lot of search data is required to train the preset re-ranking model. Herein, the preset re-ranking model can be trained by using multiple groups of the historical query data. Each group of the historical query data mainly includes a historical query requirement, a historical item set and an item visit result.

At S202, a re-ranking model is constructed, the re-ranking model is trained according to the multiple groups of the historical query data, and the trained re-ranking model is determined as the preset re-ranking model.

It should be noted that, the re-ranking model may include a variety of ranking models, one of which may be a Listwise ranking model. The Listwise ranking model can take the entire search result under a same query as a training instance, and score and rank all items. In addition, the construction of the re-ranking model may refer to the related art, and there is no limit made thereto in the embodiment of the application.

Each group of the historical query data (i.e., each query) is equivalent to a training instance. The constructed re-ranking model can be trained according to the obtained multiple groups of the historical query data, to obtain the preset re-ranking model.

It should be noted that the each group of the historical query data includes a historical query requirement, a historical item set and an item visit result. In some embodiments, the operation that the re-ranking model is trained according to the multiple groups of the historical query data and the trained re-ranking model is determined as the preset re-ranking model may include the following actions.

Multiple groups of historical input data are generated based on the historical query requirements and historical item sets in the multiple groups of the historical query data. Each group of the historical input data at least includes a target position feature value of each historical item in the historical item set.

Multiple sets of visit probability values are generated according to the item visit results in the multiple groups of the historical query data.

The re-ranking model is trained by using the multiple groups of the historical input data as model inputs and the multiple sets of the visit probability values as model outputs.

The trained re-ranking model is determined as the preset re-ranking model.

It should be noted that a group of the historical query data refers to a session data in the practical application. Specifically, each session data at least includes a historical query requirement, a historical item set and an item visit result. Herein, each query in the historical query data is equivalent to a group of data. Each query at least includes the historical query requirement (i.e. the query requirement entered by the user), the historical item set (referring to all the items and their positions in the sequence that are displayed finally to the user for the query) and the item visit result (referring to a final displaying effect, such as whether the user buys, browses, collects the item and the like).

The historical input data can be obtained according to the historical query requirement and the historical item set, and used as the input for training the model. The item visit result is processed into a set of probability values and used as the output for training the model. Finally, the preset re-ranking model is obtained after training.

Further, in some embodiments, the operation that the multiple groups of the historical input data are generated based on the historical query requirements and the historical item sets in the multiple groups of the historical query data may include the following actions.

Each historical query feature vector is determined based on a respective historical query requirement, and each historical item feature vector is determined based on a respective historical item set.

The historical query feature vector and the historical item feature vector are concatenated to obtain a historical input vector.

The obtained multiple historical input vectors are determined as the multiple groups of the historical input data.

It should be noted that, for each query aggregated from the historical data, the historical query feature vector is generated based on the historical query requirement, the historical item feature vector is determined based on the historical item set, and the historical query feature vector and the historical item feature vector are concatenated to obtain the historical input vector corresponding to the query.

Similarly, the historical item feature vector at least includes the position encoding values of the items. Thus, in some embodiments, before determining the each historical item feature vector based on the respective historical item set, the method may further include the following operations.

An original ranking position and an actual display position of each historical item are acquired. The actual display position is the ranking position of the historical item on a display page for the user.

Target position feature values of the multiple historical items are generated based on the original ranking position and display position of each historical item.

It should be noted that for each query in the historical data, the matching process, pre-ranking process, ranking process, and re-ranking process are gone through for each query requirement. Therefore, for the historical item set, the original ranking position and the actual display position can be obtained. The original ranking position refers to the position of the item calculated in the previous ranking module. The actual display position refers to the position of the item on the display page for the user. Specifically, if the re-ranking module is placed after the ranking module, the ranking position is the original ranking position for each historical item. The target position feature value can be generated according to the original ranking position and the actual display position.

The target position feature value consists of the ranking position in the first ranking result and the actual display position by definition, and the actual display position refers to the position finally displayed to the user on the website page. However, in the process of model training, each item in the historical data does have an actual display position, and the target position feature value of the historical item consists of the ranking position in the previous ranking result and the actual display position. In the process of online ranking, each item is not yet displayed to the user and therefore has no actual display position. Thus, it is assumed that all items are displayed in the preset display position. For example, the preset display position is 1 (that is, at the top of the item list), which can avoid the position bias. However, the meaning and essence of these target position feature values are actually the same.

In order to prevent the final training result from depending on the actual display position too much, a random masking operation may be performed. Thus, in some embodiments, after acquiring the original ranking position and the actual display position of each historical item, the method may further include the following operations.

Multiple unbiased historical items are determined in each historical item set based on a preset proportion.

The actual display positions of the multiple unbiased historical items are replaced with the preset display position.

It should be noted that, the preset proportion (which is determined according to an actual use requirement, such as 20%) of the historical items are selected randomly to perform the random masking operation. Specifically, the actual display positions of the selected items are replaced with the preset display position. Herein, the preset display position may be any position. For example, the preset display position may be the first place.

There are many ways to extract session data in a unified format from the historical data. One format of the session data is Pointwise, in which the data is stored in a table, the rows of the table correspond to the items, and the columns correspond to the queries and the item features respectively. During training, the data for the same session is aggregated by Identity number (ID) and input into the model. This way is inefficient in a large-scale item search system. The amount of data in e-commerce is very large, and the training stage is limited by a memory of a server. Therefore, the training source data is generally read in batches, which leads to the session at the boundary of different batches being split and the data distribution being disrupted. In addition, the aggregation operation in the training stage is time-consuming, and performing a large number of aggregation operations in each training process will affect an efficiency of iteration of the model and waste a valuable computing resource. Therefore, in the embodiment of the application, the data is prepared and the aggregation is completed in an offline stage, and session data in a unified format is generated for each session.

In this way, the target position feature value is obtained as one of item features for the historical item, so that the preset re-ranking model obtained by training fully considers the position bias, and a more accurate ranking result is obtained in the online search stage.

In the related art, there are two ranking methods related to the embodiments of the application. (1) AListwise ranking model is trained to re-rank the item list. (2) The display position generated in an original item search system is input into the current model as a feature, and the display position encoding value is constructed and merged with the original position encoding value.

That is to say, in the first ranking method, self-attention mechanism is used to extract features from the item sequence in a certain process of the ranking chain, such as the process after ranking. The position generated by scoring and ranking in the previous ranking module is used to encode the position in the item sequence. A shallow multi-layer perceptron is used in the output layer, to score the items in the sequence, so as to realize fine re-ranking. The second ranking method is to solve the problem of the data bias. The display position is input into the model as a basic feature and transformed through the shallow perceptron to obtain a probability value corresponding to the display position, and the probability value is added into an original connection function of the model. Thus, bias information is introduced into the training stage. In the prediction stage, the display position features are normalized into a unified position to eliminate position bias.

However, no technical solution has been found currently to deal with the position bias by applying the target position feature value in the re-ranking stage.

In the related art, the item position generated by the previous ranking module in the ranking chain is used as the position encoding value without considering the position bias. The position bias problem will be further enlarged in the re-ranking stage using Listwise model, because when calculating the self-attention score, the position encoding values of any two items in the sequence will participate in the calculation, the order of the entire sequence will be seen by the model, and the position bias will have a negative impact on the entire model. The traditional way of taking the display position as the input feature, predicting the display position, and informing the bias information to the model also has defects. In the re-ranking stage, the final position of items in the sequence will be affected by the context. Therefore, it is required to consider from a global perspective to solve the position bias problem, rather than evaluating a single point position in isolation.

To sum up, there are two purposes for the embodiments of the application. One is to apply the Listwise model to re-rank items finely, such that the ranking result matches the browsing behavior of the user better, and the user experience is improved. The other is to use the target position feature value in the re-ranking model, and input the display position bias of the old system into the current model, so as to correct the position bias better and strengthen the effect of the individualized ranking.

The key points of the embodiments of the application are mainly as follows.

(1) The target position feature value is input into the Listwise model as the feature in the re-ranking stage.
(2) The target position feature value is constructed and merged with relative position encoding to form bias correction position encoding.

With the above advantages, the embodiments of the application have a good application prospect in the fields such as search, advertisement, and recommendation of various services.

Specifically, two aspects have been improved in the item search system. On one hand, the current ranking module is limited by inference performance. Generally, Pointwise method is used to score items, and the items are displayed to the user after ranking according to the scores. However, this method does not consider the impact of the context of the item sequence, does not match a browsing behavior of the user, and has problems such as lack of diversity. A re-ranking module is added after the ranking module to rank the key head part finely using Listwise model. The model can rank the items in the global field of vision, and the ranking result matches the browsing behavior of the user better. On the other hand, the target position feature value is used to eliminate the position bias, and the target position feature value is input into the model, so that the position bias is known when the model calculates the self-attention score, which reduces the negative impact caused by the display position, makes the ranking result fairer, and implicitly enhances the individualized experience of the user.

In the fields such as document retrieval, video search, recommendation, advertisement and the like, the ranking is an important aspect that directly impacts the feelings of the user. The user interacts with the item search system by browsing the sample sequence generated by the item search system and combining its own preferences. These systems also have a feedback loop effect similar to that of the item search system, which is impacted by the position bias. The re-ranking model that corrects the display position encoding bias is applied to improve the ranking result and promote the satisfaction of the user.

The embodiments of the application provide a ranking method. The specific implementations of the foregoing embodiments have been described in detail. It can be seen that the items are re-ranked more finely by using the preset re-ranking model after ranking, so that the items can be ranked by using the preset re-ranking model in a global field of vision, and the final ranking result matches a browsing behavior of the user better. In addition, the target position feature value is calculated based on the ranking position in the first ranking result and the preset display position, and the target position feature value is used as one of the features of the item. In this way, the ranking result in the ranking process may be fully considered during the re-ranking process, the position bias caused by the display position is reduced, and the negative impact of the position bias on the ranking result is reduced, so that the ranking result is fairer and the final ranking result is more in line with the requirements of the user, thereby improving the satisfaction of the user.

FIG. 3 illustrates a flowchart of a ranking method according to yet another embodiment of the application. As illustrated in FIG. 3, the method may include the following operations.

At S301, in an offline stage, the historical data is read and processed to obtain input data and supervision data for model training.

It should be noted that the complete item ranking chain in the practical application includes processes such as matching, pre-ranking, ranking and re-ranking. The ranking method in the embodiments of the application is applied to the re-ranking process. Specifically, the preset re-ranking model adopted in the embodiments of the application is the Listwise re-ranking model. In the practical application, the Listwise re-ranking module is placed after the ranking module, and used to rank the head item list in the ranking result more finely.

In order to train Listwise re-ranking model, it is necessary to generate data in a session format according to the historical data, that is, the list of items returned to the user in one query. Each session is distinguished by a unique ID. The common format for generating the session data is intuitive Pointwise format. The data is stored in a table, the rows correspond to the items, and the columns correspond to the query features and the item features respectively. During training, the data for the same session is aggregated by ID and input into the model. However, this way is inefficient in a large-scale item search system. The amount of data in e-commerce is very large, and the training stage is limited by the memory. Therefore, the data is generally read in batches, which leads to the session at the boundary of different batches being split and the data distribution being disrupted. In addition, the aggregation operation in the training stage is time-consuming, and performing a large number of aggregation operations in each training process will affect an efficiency of iteration of the model and waste a valuable computing resource. Therefore, in order to overcome the above drawbacks, in the embodiments of the application, the data is prepared and the aggregation is completed in the offline stage. An example of an aggregation format of the resulting session data is illustrated in Table 1.

Table 1

| num_query_features | num_items | query feature 0 | ... | query feature n | item_0 feature _0 | ... | item_0 feature_ m | item_t feature _0 | ... | item_t feature _m |
|---|---|---|---|---|---|---|---|---|---|---|
| | | | ... | | | ... | | | ... | |

As illustrated in Table 1, the row of the table represents one complete session, and the number of columns in each row varies, mainly including the number of columns of query features, the total number of session items, the columns of query features and the columns of item features. Herein, the query features may indicate the query requirement of the user. Because each session corresponds to a respective query, in order to reduce overhead of the input and the output, only one set of query features is saved per session. When reading data in the training stage, the query features are concatenated with the item feature to form a complete input data for model training.

In addition, the supervision data for Listwise re-ranking model may be understood as a behavior probability value of the user for the item in each query, such as a click probability value, a collection probability value, a purchase probability value or a combination of the above probability values. Therefore, it is necessary to process the historical data to obtain the supervision data for model training.

At S302, the model is trained with the input data and the supervision data for model training to obtain the preset re-ranking model.

It should be noted that the preset re-ranking model is obtained by training the model with the input data and the supervision data for model training.

The process of the model training mainly includes three steps, that is, feature preprocessing (equivalent to processing the original data into the input data for model training), self-attention score calculation and implicit transformation.

(1) Feature preprocessing: the input features are preprocessed. There are three methods for preprocessing numerical feature, minmax normalization, logminmax normalization and bucketing. The specific feature preprocessing method can be determined according to the application scenario.

Here, the minmax normalization process is illustrated in Equation (1).

$$x_{\min\max} = \frac{x - x_{\min}}{x_{\max} - x_{\min}} \qquad (1)$$

The logminmax normalization refers to applying minmax normalization after taking the logarithm of the feature. The process is illustrated in Equations (2) and (3). The advantage of logminmax normalization is that the range of the features can be reduced by taking log, so that the maximum value of the features can be prevent from being too large and affecting the feature with smaller value.

$$y = \log x \qquad (2)$$

$$y_{\min\max} = \frac{y - y_{\min}}{y_{\max} - y_{\min}} \qquad (3)$$

Bucketing is a common method for discretization. A continuous feature is discretized into a series of 0/1 discrete features. Bucketing can be regarded as discretization of a numerical variable, and then one-hot encoding is performed by binarization.

Specifically, the ways of bucketing in the related art include equidistance bucketing and equifrequency bucketing. Equidistance bucketing means that the width of each bucket is fixed, that is, the range of values is fixed, such as 0-9, 10-19, 20-29 and the like. Equidistance bucketing is suitable for the situation that the sample distribution is relatively uniform, and avoids the situation that some buckets have very few samples and some buckets have excessive samples.

Equifrequency bucketing is also called a quantile bucketing. There are the same number of samples in each bucket, but samples with too large numerical difference may be placed in the same bucket. The ways of bucketing can be flexibly selected according to the types of the features.

The above features are randomly initialized into an n-dimensional feature vector, n can be 8, and the parameters of the feature vector are updated with the model training process. The final input data for model training is merged by concatenating, as illustrated in Equation (4).

$$InputEmbedding = concat(fea1, fea2......fea\_n) \qquad (4)$$

(2) Self-attention score calculation includes two steps. The first step is to calculate the attention score of each item in the sequence. InputEmbedding is projected to three directions by linear transformation, which are recorded as Q, K and V respectively. The calculation formula of the self-attention score is illustrated in Equation (5). The second step is to perform nonlinear transformation by a feedforward neural network with a hidden layer.

$$\text{Attention }(Q, K, V) = softmax(\frac{Q}{\sqrt{d_k}})V \qquad (5)$$

(3) Implicit transformation. Unlike the ranking model using a deep neural network as a feature extractor and classifier, the preset re-ranking model uses a transformer encoder that takes into account sequence information as the feature extractor. The matrix vector obtained above is extracted again. The extracted intermediate vector is already a dense vector with high information density, so the output layer only needs a shallow multilayer perceptron as the classifier. Herein, the feedforward neural network with the hidden layer is used as the output layer. Finally, all items in the sequence are scored by using softmax function as illustrated in Equation (6), where the calculation formula of softmax function is illustrated in equation (7).

$$scores = softmax(f(x)) \qquad (6)$$

$$softmax(z) = \frac{\exp z_i}{\sum \exp z_j} \qquad (7)$$

Where, x is the input layer vector and f (x) represents the re-ranking model.

Because the self-attention mechanism does not retain position information, the original position is encoded into the vector as a feature and input into the encoder. When calculating the self-attention score, the position information is added and the ranking result of the ranking process is fully utilized. Common position encoding methods include a sine function encoding method, a random learnable vector encoding method and a relative position encoding method. With the support of massive data of item search, the random learnable vector encoding method has the best effect, because the encoding model can summarize a position pattern from the data. For the random learnable vector encoding method, a vector with the same dimension as an input layer is randomly initialized, a parameter is set into a learnable state, and a gradient of the model is transmitted back to a position encoding layer.

In order to weaken the position bias, the actual display position is encoded into another vector in the same way, and merged with the ranking position encoding to form a final target position feature value. There are two key points when forming the final position encoding. The first key point is to make full use of the ranking position information and the actual display position information, and sum pooling is used to merge. The second key point is to prevent the model from depending too much on the actual display position. Randomness is introduced by using random masking technology, that is, the display positions of a certain percentage of the samples are discarded. Assuming that the first place of the display positions is unbiased, the masked samples are processed as unbiased samples, that is, the display positions of the masked samples are uniformly replaced with 1, and the probability of the random masking is 20%.

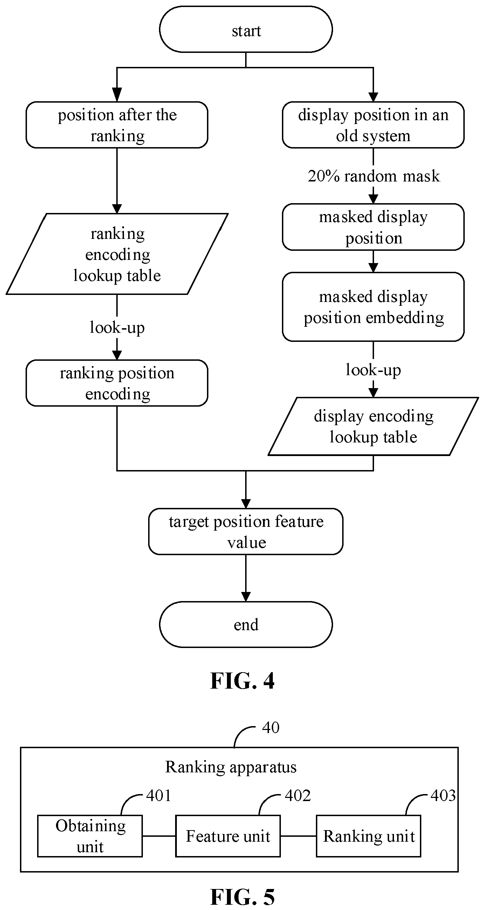

A process for generating a final actual display position is illustrated in FIG. 4. As illustrated in FIG. 4, firstly, a ranking lookup table is looked up according to a position of a specific item after the ranking process (i.e., the ranking position) to obtain a ranking position encoding. Secondly, a random masking operation with a probability of 20% is performed on display positions of an old system (equivalent to the actual display positions), that is, 20% of the items are selected and the actual display positions of which are uniformly replaced with the preset display position, so as to prevent the final result from depending too much on the actual display positions. Continuous vector transformation (embedding) is performed on the display position after the random masking, and then the display position encoding is obtained according to the encoding lookup table. Finally, sum pooling is performed on the ranking position encoding and the display position encoding to obtain the final target position feature value.

That is to say, the actual display position is encoded into another vector in the same way, and merged with the ranking position encoding to form a final target position feature value. There are two key points when forming the target position feature value. The first key point is to make full use of the ranking position information and the actual display position information, and sum pooling is used to merge. The second key point is to prevent the model from depending too much on the actual display position. Randomness is introduced by using the random masking technology, that is, the actual display positions of a certain percentage of the samples are discarded. Assuming that the first place of the actual display positions is unbiased, the masked samples are processed as the unbiased samples, that is, the actual display positions of the masked samples are uniformly replaced with 1, and the probability of the random masking is 20%.

In this way, after the above steps, the supervision data for model training is input at the same time, and finally the preset re-ranking model is obtained by training.

At S303, in the online stage, the re-ranking result of the items is obtained by using the preset re-ranking model.

In the online prediction stage, the ranking positions of the items are derived from the scores of the ranking model. The ranking model is Pointwise structure in the prediction stage. The ranking score corresponding to each item is stored in the respective data structure before re-ranking. In the re-ranking stage, the item list needs to be ranked according to the ranking scores of the items. Because re-ranking is a finer ranking process, the computational overhead is relatively large. In order not to affect a response time of the entire search system, only the head part of the list, such as the top 10 or the top 30, are selected for ranking and scoring. After ranking according to the ranking scores, the items are numbered from 1 according to the sequence position to generate the ranking position. The ranking position is input into the model as the index of the position encoding, and the position encoding of the item sequence learned in the offline stage can be obtained quickly.

In the online prediction stage, the display position features may be generated after all ranking processes are completed, so the display position features cannot be obtained directly. In order to eliminate the impact of the display position bias on the item search system, the first place is assumed to be unbiased in the offline training stage, the display positions of all items are set to be 1 directly and forcibly in the online prediction stage, and the corresponding position encoding is directly obtained in the input layer. The final position encoding is obtained through sum pooling.

The application has a good application prospect in the fields such as search, advertisement, and recommendation of various services.

Two aspects have been improved in the item search system. On one hand, the current ranking module is limited by inference performance. Generally, Pointwise method is used to score items, and the items are displayed to the user after ranking according to the scores. However, this method does not consider the impact of the context of the item sequence, does not match a browsing behavior of the user, and has problems such as lack of diversity. A re-ranking module is added after the ranking module to rank the key head part finely using Listwise model. The model can rank the items in the global field of vision, and the ranking result matches the browsing behavior of the user better. On the other hand, the target position feature value is used to eliminate the position bias, and the display location is encoded and input into the model, so that the position bias is known when the model calculates the self-attention score, which reduces the negative impact caused by the display position, makes the ranking result fairer, and implicitly enhances the individualized experience of the user.

In the fields such as document retrieval, video search, recommendation, advertisement and the like, the ranking is an important aspect that directly impacts the feelings of the user. The user interacts with the item search system by browsing the sample sequence generated by the item search system and combining its own preferences. These systems also have a feedback loop effect similar to that of the item search system, which is impacted by the position bias. The re-ranking model that corrects the display position encoding bias is applied to improve the ranking result and promote the satisfaction of the user.

The embodiments of the application provide a ranking method. The specific implementations of the foregoing embodiments have been described in detail. It can be seen that the items are re-ranked more finely by using the preset re-ranking model after ranking, so that the items can be ranked by using the preset re-ranking model in a global field of vision, and the final ranking result matches a browsing behavior of the user better. In addition, the target position feature value is calculated based on the ranking position in the first ranking result and the preset display position, and the target position feature value is used as one of the features of the item. In this way, the ranking result in the ranking process may be fully considered during the re-ranking process, the position bias caused by the display position is reduced, and the negative impact of the position bias on the ranking result is reduced, so that the ranking result is fairer and the final ranking result is more in line with the requirements of the user, thereby improving the satisfaction of the user.

FIG. 5 illustrates a schematic structural diagram of a ranking apparatus 40 according to an embodiment of the application. As illustrated in FIG. 5, the ranking apparatus 40 includes an obtaining unit 401, a feature unit 402 and a ranking unit 403.

The obtaining unit 401 is configured to determine a first ranking result based on a query requirement from a user. The first ranking result is obtained by ranking at least one item to be ranked in a preset item list based on the query requirement.

The feature unit 402 is configured to determine a feature value set of each item to be ranked in the preset item list based on the first ranking result. The feature value set at least includes a target position feature value, and the target position feature value is calculated based on a ranking position of the item to be ranked in the first ranking result and a preset display position of the item to be ranked.

The ranking unit 403 is configured to re-rank the preset item list based on the feature value set of each item to be ranked in the preset item list by using a preset re-ranking model, to obtain a second ranking result.

In some embodiments, the obtaining unit 401 is further configured to receive the query requirement from the user; rank multiple items based on the query requirement from the user by using a preset ranking model, to obtain an initial item sequence; and intercept the initial item sequence based on a preset quantity, to obtain the preset item list.

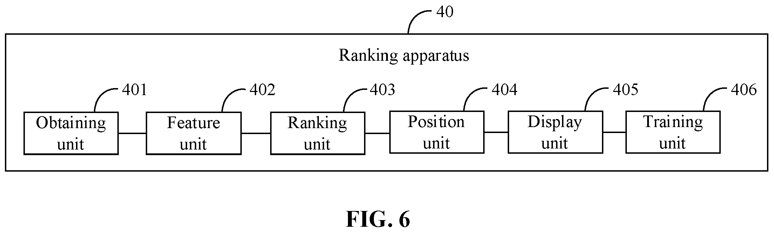

In some embodiments, as illustrated in FIG. 6, the ranking apparatus 40 further includes a position unit 404 configured to determine the target position feature value of each item to be ranked. The position unit 404 is further configured to determine a first position encoding value of each item to be ranked through a preset first lookup table based on the ranking position of the item to be ranked in the first ranking result; determine a preset second encoding value of each item to be ranked through a preset second lookup table based on the preset display position of the item to be ranked; and perform a sum pooling calculation on the first position encoding value and the preset second encoding value of each item to be ranked, to obtain the target position feature value of the item to be ranked.

In some embodiments, the ranking unit 403 is further configured to calculate a score of each item to be ranked by using the preset re-ranking model based on the feature value set of the item to be ranked in the preset item list; and rank the preset item list based on the score of each item to be ranked, to obtain the second ranking result.

In some embodiments, the ranking unit 403 is further configured to determine a query feature vector based on the query requirement; determine an item feature vector based on the feature value set of each item to be ranked; concatenate the query feature vector and the item feature vector to obtain a re-ranking input vector; and input the re-ranking input vector into the preset re-ranking model to obtain the score of each item to be ranked.

In some embodiments, as illustrated in FIG. 6, the ranking apparatus 40 further includes a display unit 405 configured to recommend items to the user based on the second ranking result.

In some embodiments, as illustrated in FIG. 6, the ranking apparatus 40 further includes a training unit 406. The training unit 406 is configured to obtain multiple groups of historical query data; construct a re-ranking model; train the re-ranking model according to the multiple groups of the historical query data; and determine the trained re-ranking model as the preset re-ranking model.

In some embodiments, each group of the historical query data includes a historical query requirement, a historical item set, and an item visit result. The training unit 406 is further configured to: generate multiple groups of historical input data based on the historical query requirements and the historical item sets in the multiple groups of the historical query data, where each group of the historical input data at least includes a target position feature value of each historical item in the historical item set; generate multiple sets of visit probability values according to the item visit results in the multiple groups of the historical query data; train the re-ranking model by using the multiple groups of the historical input data as model inputs and the multiple sets of the visit probability values as model outputs; and determine the trained re-ranking model as the preset re-ranking model.

It should be understood that in the embodiments, a "unit" may be part of a circuit, part of a processor, part of a program or software and the like. The "unit" may also be a module, or be non-modular. Moreover, each component in the embodiments may be integrated into a processing unit, or each unit may exist physically and separately, or two or more than two units may be integrated into one unit. The integrated unit described above may be implemented in the form of hardware or in the form of a software function module.

If the integrated unit is implemented in the form of the software function module and sold or used as a stand-alone product, the integrated unit may be stored in a computer readable storage medium. Based on such understanding, the technical solution essentially, or the part of the technical solution that contributes to the related art, or the whole or part of the technical solution of the embodiments may be embodied in the form of a software product. The computer software product is stored in a storage medium and includes a number of instructions to enable a computer device (which may be a personal computer, a server, a network device, or the like) or a processor to perform all or part of the steps of the method described in the embodiments. The storage medium may include: a universal serial bus (USB) flash disk, a portable hard disk, a read only memory (ROM), a random access memory (RAM), a magnetic disk, an optical disk, or other mediums capable of storing program codes.

Thus, an embodiment provides a computer storage medium having stored thereon a ranking program that, when being executed by at least one processor, causes the at least one processor to implement the steps of the method of any one of the previous embodiments.

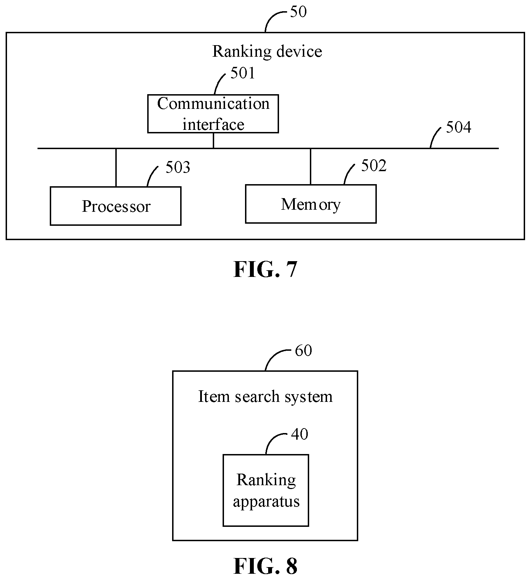

On the basis of the composition of the ranking apparatus 40 and the computer storage medium described above, FIG. 7 illustrates a schematic diagram of a specific hardware structure of a ranking device 50 according to an embodiment of the application. As illustrated in FIG. 7, the ranking device 50 may include: a communication interface 501, a memory 502 and a processor 503. The various components are coupled together by a bus device 504. It can be understood that the bus device 504 is configured to implement communications between these components. In addition to a data bus, the bus device 504 includes a power bus, a control bus and a status signal bus. For clarity, the various buses are labeled as the bus device 504 in FIG. 7. The communication interface 501 is configured to receive and send signals during a process of sending and receiving information with other external network elements.

The memory 502 is configured to store executable instructions capable of running on the processor 503.

The processor 503 is configured to execute the following operations when running the executable instructions.

A first ranking result is determined based on a query requirement from a user. The first ranking result is obtained by ranking at least one item to be ranked in a preset item list based on the query requirement.

A feature value set of each item to be ranked in the preset item list is determined based on the first ranking result. The feature value set at least includes a target position feature value, and the target position feature value is calculated based on a ranking position of the item to be ranked in the first ranking result and a preset display position of the item to be ranked.

The preset item list is re-ranked based on the feature value set of each item to be ranked in the preset item list by using a preset re-ranking model, to obtain a second ranking result.

It can be understood that the memory 502 in the embodiment of the application may be a volatile memory, a non-volatile memory, or include both the volatile memory and the non-volatile memory. The non-volatile memory may be an ROM, a programmable ROM (PROM), an erasable PROM (EPROM), an electrically EPROM (EEPROM), or a flash memory. The volatile memory may be an RAM which serves as an external cache. By way of illustration but not limitation, many forms of RAMs are available, such as a static RAM (SRAM), a dynamic RAM (DRAM), a synchronous DRAM (SDRAM), a double data rate SDRAM (DDRSDRAM), an enhanced SDRAM (ESDRAM), a synchronous link DRAM (SLDRAM), and a direct rambus RAM (DRRAM). The memory 502 in the device and the method described herein is intended to, but not limited to, include these and any other suitable types of memories.

The processor 503 may be an integrated circuit chip with a signal processing capability. The steps of the above methods may be accomplished by an integrated logic circuit in the form of hardware in the processor 503 or instructions in the form of software during the process of implementation. The processor 503 described above may be a general processor, a digital signal processor (DSP), an application specific integrated circuit (ASIC), a field programmable gate array (FPGA) or other programmable logic devices, a discrete gate or a transistor logic device, or a discrete hardware component, and may implement or perform the various methods, steps and logic blocks disclosed in the embodiments of the application. The general processor may be a microprocessor or any conventional processor or the like. The steps of the methods disclosed in the embodiments of the application may be directly executed by a hardware decoding processor or by a combination of the hardware in the hardware decoding processor and software modules. The software modules may be located in an RAM, a flash memory, an ROM, a PROM or an EEPROM, a register and other mature storage medium in the art. The storage medium is in the memory 502, and the processor 503 reads information in the memory 502 and completes the steps of the above methods in combination with hardware thereof.

It will be understood that the embodiments described herein may be implemented by hardware, software, firmware, middleware, microcode or a combination thereof. For the hardware implementation, a processing unit may be implemented in one or more ASICs, DSPs, DSP devices (DSPDs), programmable logic devices (PLDs), field-programmable gate arrays (FPGAs), general processors, controllers, microcontrollers, microprocessors, other electronic units for performing the functions described herein, or the combinations thereof.

For the software implementation, the techniques described herein may be implemented by modules (e.g., procedures, functions, etc.) that perform the functions described in the application. The software codes may be stored in a memory and executed by a processor. The memory may be implemented in the processor or outside the processor.

Alternatively, in another embodiment, the processor 503 is further configured to run the executable instructions to execute the steps of the method of any one of the previous embodiments.

On the basis of the composition of the ranking apparatus 40 and the hardware structure of the ranking device 50 described above, FIG. 8 illustrates a schematic diagram of a composition structure of an item search system 60 according to an embodiment of the application. As illustrated in FIG. 8, the item search system 60 at least includes the ranking apparatus 40. The items are re-ranked more finely by using the preset re-ranking model after ranking, so that the items can be ranked by using the preset re-ranking model in a global field of vision, and the final ranking result matches a browsing behavior of the user better. In addition, the target position feature value is calculated based on the ranking position in the first ranking result and the preset display position, and the target position feature value is used as one of the features of the item. In this way, the ranking result in the ranking process may be fully considered during the re-ranking process, the position bias caused by the display position is reduced, and the negative impact of the position bias on the ranking result is reduced, so that the ranking result is fairer and the final ranking result is more in line with the requirements of the user, thereby improving the satisfaction of the user.

The above description merely describes the preferred embodiments of the application and is not intended to limit the scope of protection of the application.

It should be noted that, in the application, the terms "comprising", "including" or any other variations thereof are intended to encompass non-exclusive inclusion, so that a process, method, object or apparatus which includes a series of elements includes not only those elements but also other elements that are not explicitly listed, or elements inherent in the process, method, object or apparatus. Without further limitations, an element defined by the phrase "including a..." does not exclude the existence of another identical element in the process, method, object or apparatus which includes the element.

The above serial numbers of the embodiments of the application are used for description only and do not represent the advantages and disadvantages of the embodiments.

The methods disclosed in several method embodiments provided in the application may be arbitrarily combined to obtain new method embodiments without conflicting with each other.

The features disclosed in several product embodiments provided in the application may be arbitrarily combined to obtain new product embodiments without conflicting with each other.

The features disclosed in several method or device embodiments provided in the application may be arbitrarily combined to obtain new method embodiments or device embodiments without conflicting with each other.

The above descriptions are only the specific implementations of the application, and the scope of protection of the application is not limited thereto. Any modification or variation readily conceivable by a person skilled in the art within the technical scope disclosed in the application should be covered within the scope of protection of the application. Therefore, the scope of protection of the application shall be subject to the scope of protection of the claims.

**Claims**

1. A ranking method, comprising:

   determining a first ranking result based on a query requirement from a user, wherein the first ranking result is obtained by ranking at least one item to be ranked in a preset item list based on the query requirement;
   determining a feature value set of each item to be ranked in the preset item list based on the first ranking result, wherein the feature value set at least comprises a target position feature value, and the target position feature value is calculated based on a ranking position of the item to be ranked in the first ranking result and a preset display position of the item to be ranked; and
   re-ranking the preset item list based on the feature value set of each item to be ranked in the preset item list by using a preset re-ranking model, to obtain a second ranking result.

2. The ranking method of claim 1, further comprising:

   receiving the query requirement from the user;
   ranking a plurality of items based on the query requirement from the user by using a preset ranking model, to obtain an initial item sequence; and
   intercepting the initial item sequence based on a preset quantity, to obtain the preset item list.

3. The ranking method of claim 1, further comprising:

   before determining the feature value set of each item to be ranked in the preset item list based on the first ranking result,
   determining the target position feature value of each item to be ranked, comprising:

   determining a first position encoding value of each item to be ranked through a preset first lookup table based on the ranking position of the item to be ranked in the first ranking result;
   determining a preset second encoding value of each item to be ranked through a preset second lookup table based on the preset display position of the item to be ranked; and
   performing a sum pooling calculation on the first position encoding value and the preset second encoding value of each item to be ranked, to obtain the target position feature value of the item to be ranked.

4. The ranking method of claim 1, wherein re-ranking the preset item list based on the feature value set of each item to be ranked in the preset item list by using the preset re-ranking model to obtain the second ranking result comprises:

   calculating a score of each item to be ranked by using the preset re-ranking model based on the feature value set of the item to be ranked in the preset item list; and
ranking the preset item list based on the score of each item to be ranked, to obtain the second ranking result.

5. The ranking method of claim 4, wherein calculating the score of each item to be ranked by using the preset re-ranking model based on the feature value set of the item to be ranked in the preset item list comprises:

   determining a query feature vector based on the query requirement;
   determining an item feature vector based on the feature value set of each item to be ranked;
   concatenating the query feature vector and the item feature vector to obtain a re-ranking input vector; and
   inputting the re-ranking input vector into the preset re-ranking model to obtain the score of the item to be ranked.

6. The ranking method of claim 1, further comprising:

   after re-ranking the preset item list by using the preset re-ranking model to obtain the second ranking result,
   recommending items to the user based on the second ranking result.

7. The ranking method of claim 1, further comprising:

   obtaining a plurality of groups of historical query data;
   constructing a re-ranking model;
   training the re-ranking model according to the plurality of groups of the historical query data; and
   determining the trained re-ranking model as the preset re-ranking model.

8. The ranking method of claim 7, wherein each group of the historical query data comprises a historical query requirement, a historical item set, and an item visit result; and
   training the re-ranking model according to the plurality of groups of the historical query data and determining the trained re-ranking model as the preset re-ranking model comprises:

   generating a plurality of groups of historical input data based on the historical query requirements and the historical item sets in the plurality of groups of the historical query data, wherein each group of the historical input data at least comprises a target position feature value of each historical item in the historical item set;
   generating a plurality of sets of visit probability values according to the item visit results in the plurality of groups of the historical query data;
   training the re-ranking model by using the plurality of groups of the historical input data as model inputs and the plurality of sets of the visit probability values as model outputs; and
   determining the trained re-ranking model as the preset re-ranking model.

9. A ranking apparatus, comprising:

   an obtaining unit, configured to determine a first ranking result based on a query requirement from a user, wherein the first ranking result is obtained by ranking at least one item to be ranked in a preset item list based on the query requirement;
   a feature unit, configured to determine a feature value set of each item to be ranked in the preset item list based on the first ranking result, wherein the feature value set at least comprises a target position feature value, and the target position feature value is calculated based on a ranking position of the item to be ranked in the first ranking result and a preset display position of the item to be ranked; and
   a ranking unit, configured to re-rank the preset item list based on the feature value set of each item to be ranked in the preset item list by using a preset re-ranking model, to obtain a second ranking result.

10. The ranking apparatus of claim 9, wherein the obtaining unit is further configured to:

    receive the query requirement from the user;
    rank a plurality of items based on the query requirement from the user by using a preset ranking model, to obtain an initial item sequence; and
    intercept the initial item sequence based on a preset quantity, to obtain the preset item list.

11. The ranking apparatus of claim 9, further comprising:

a position unit, configured to determine the target position feature value of each item to be ranked, wherein the position unit is specifically configured to:

determine a first position encoding value of each item to be ranked through a preset first lookup table based on the ranking position of the item to be ranked in the first ranking result;
determine a preset second encoding value of each item to be ranked through a preset second lookup table based on the preset display position of the item to be ranked; and
perform a sum pooling calculation on the first position encoding value and the preset second encoding value of each item to be ranked, to obtain the target position feature value of the item to be ranked.

12. The ranking apparatus of claim 9, wherein the ranking unit is further configured to:

calculate a score of each item to be ranked by using the preset re-ranking model based on the feature value set of the item to be ranked in the preset item list; and
rank the preset item list based on the score of each item to be ranked, to obtain the second ranking result.

13. The ranking apparatus of claim 9, wherein the ranking unit is further configured to:

determine a query feature vector based on the query requirement;
determine an item feature vector based on the feature value set of each item to be ranked;
concatenate the query feature vector and the item feature vector to obtain a re-ranking input vector; and
input the re-ranking input vector into the preset re-ranking model to obtain the score of the item to be ranked.

14. The ranking apparatus of claim 9, further comprising:
a display unit, configured to recommend items to the user based on the second ranking result.

15. The ranking apparatus of claim 9, further comprising: a training unit configured to:

obtain a plurality of groups of historical query data;
construct a re-ranking model;
train the re-ranking model according to the plurality of groups of the historical query data; and
determine the trained re-ranking model as the preset re-ranking model.

16. The ranking apparatus of claim 15, wherein each group of the historical query data comprises a historical query requirement, a historical item set, and an item visit result; and
the training unit is further configured to:

generate a plurality of groups of historical input data based on the historical query requirements and the historical item sets in the plurality of groups of the historical query data, wherein each group of the historical input data at least comprises a target position feature value of each historical item in the historical item set;
generate a plurality of sets of visit probability values according to the item visit results in the plurality of groups of the historical query data;
train the re-ranking model by using the plurality of groups of the historical input data as model inputs and the plurality of sets of the visit probability values as model outputs; and
determine the trained re-ranking model as the preset re-ranking model.

17. A ranking device, comprising:

a memory storing executable instructions capable of running on a processor; and
the processor, configured to run the executable instructions to execute operations of the method of any one of claims 1 to 8.

18. A computer storage medium having stored thereon a ranking program that, when being executed by at least one processor, causes the at least one processor to implement operations of the method of any one of claims 1 to 8.

S101

A first ranking result is determined based on a query requirement from a user

S102

A feature value set of each item to be ranked in a preset item list is determined based on the first ranking result

S103

The preset item list is re-ranked based on the feature value set of each item to be ranked in the preset item list by using a preset re-ranking model, to obtain a second ranking result

**FIG. 1**

S201

Multiple groups of historical query data are obtained

S202

A re-ranking model is constructed, the re-ranking model is trained according to the multiple groups of the historical query data, and the trained re-ranking model is determined as the preset re-ranking model

**FIG. 2**

S301

In an offline stage, the historical data is read and processed to obtain input data and supervision data for model training

S302

The preset re-ranking model is trained by using the input data and the supervision data for model training

S303

In an online stage, the re-ranking result of the items is obtained by using the preset re-ranking model

**FIG. 3**

start

position after the ranking

display position in an old system

20% random mask

ranking encoding lookup table

masked display position

look-up

masked display position embedding

ranking position encoding

look-up

display encoding lookup table

target position feature value

end

**FIG. 4**

40

Ranking apparatus

401

Obtaining unit

402

Feature unit

403

Ranking unit

**FIG. 5**

40

Ranking apparatus

| Obtaining unit | Feature unit | Ranking unit | Position unit | Display unit | Training unit |
|---|---|---|---|---|---|
| 401 | 402 | 403 | 404 | 405 | 406 |

**FIG. 6**

50

Ranking device

501

Communication interface

504

503

Processor

502

Memory

**FIG. 7**

60

Item search system

40

Ranking apparatus

**FIG. 8**

## INTERNATIONAL SEARCH REPORT

| | International application No. |
| --- | --- |
| | **PCT/CN2021/124783** |

| A. | CLASSIFICATION OF SUBJECT MATTER |
| --- | --- |

G06Q 30/06(2012.01)i

According to International Patent Classification (IPC) or to both national classification and IPC

| B. | FIELDS SEARCHED |
| --- | --- |

Minimum documentation searched (classification system followed by classification symbols)

G06Q

Documentation searched other than minimum documentation to the extent that such documents are included in the fields searched

Electronic data base consulted during the international search (name of data base and, where practicable, search terms used)

CNPAT, CNKI, WPI, EPODOC: 排序, 推荐, 查询, 商品, 特征, 位置, 重排, 二次, 假定, recommendation, sort, rank, feature, query, accurate, position

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| A | CN 111475730 A (TENCENT TECHNOLOGY (BEIJING) CO., LTD.) 31 July 2020 (2020-07-31) description paragraphs [0071]-[0074], [0104]-[0197] | 1-18 |
| A | CN 111159242 A (QUVIDEO INC.) 15 May 2020 (2020-05-15) entire document | 1-18 |
| A | CN 109033140 A (BEIJING BAIDU NETCOM SCIENCE AND TECHNOLOGY CO., LTD.) 18 December 2018 (2018-12-18) entire document | 1-18 |
| A | US 2020265095 A1 (MICROSOFT TECHNOLOGY LICENSING, L.L.C.) 20 August 2020 (2020-08-20) entire document | 1-18 |
| A | WO 2020133549 A1 (BEIJING DIDI INFINITY TECHNOLOGY AND DEVELOPMENT CO., LTD.) 02 July 2020 (2020-07-02) entire document | 1-18 |

☐ Further documents are listed in the continuation of Box C.       ☑ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **27 December 2021** | **19 January 2022** |

| Name and mailing address of the ISA/CN | Authorized officer |
| --- | --- |
| **China National Intellectual Property Administration (ISA/ CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
**Information on patent family members**

International application No.

**PCT/CN2021/124783**

| Patent document cited in search report | | | Publication date (day/month/year) | Patent family member(s) | | | Publication date (day/month/year) |
|---|---|---|---|---|---|---|---|
| CN | 111475730 | A | 31 July 2020 | None | | | |
| CN | 111159242 | A | 15 May 2020 | None | | | |
| CN | 109033140 | A | 18 December 2018 | US | 2019377738 | A1 | 12 December 2019 |
| | | | | EP | 3579115 | A1 | 11 December 2019 |
| US | 2020265095 | A1 | 20 August 2020 | WO | 2020172009 | A1 | 27 August 2020 |
| | | | | IN202147034506 | | A | 13 August 2021 |
| WO | 2020133549 | A1 | 02 July 2020 | CN | 110765368 | A | 07 February 2020 |

Form PCT/ISA/210 (patent family annex) (January 2015)

**REFERENCES CITED IN THE DESCRIPTION**

**Patent documents cited in the description**

- CN 202011126741